# DEMANDE DE BREVET EUROPEEN

(11) **EP 1 803 886 A1**
(43) Date de publication de la demande: **04.07.2007**
(21) Numéro de dépôt: 06290024.6
(22) Date de dépôt: 03.01.2006
(51) Int. Cl.: E06B 9/04, F24J 2/24

(54) **Ecran thermique translucide et batiment intégrant ledit écran**

(71) Demandeur: UGITECH, 73400 Ugine (FR); Amitrano, Victorien, 92500 Rueil-Malmaison (FR)
(72) Inventeur: Amitrano, Victorien, 92500 Rueil-Malmaison (FR); Minola, Philippe, 73200 Mercury (FR); Tiberghien, Guillaume, 59700 Marcq en Baroeul (FR)
(74) Mandataire: Lagrange, Jacques Etienne M.M.

(57) **Abrégé**

L'invention concerne un écran thermique translucide (1) comprenant successivement :
- un panneau de captage et d'émission de chaleur (2), à base de toile métallique dont le taux d'ouverture A₀ est compris entre 30 et 70%, ledit panneau présentant une conductivité thermique globale à 20°C comprise entre 10 et 60 W/m°C et une capacité thermique massique supérieure ou égal à 400 J/kg.K,
- des moyens de stockage de chaleur (3), comprenant éventuellement des moyens de chauffage d'appoint et/ou des moyens d'éclairage, lesdits moyens occultant moins de 50% de la surface dudit écran,
- un panneau d'isolation (4) constitué d'une toile présentant un taux d'ouverture A₀ compris entre 30 et 70%,
ainsi qu'un bâtiment comprenant au moins une surface vitrée devant laquelle est positionnée au moins un écran thermique translucide (1) selon l'invention.

## Description

La présente invention est relative à un écran thermique translucide, ainsi qu'à un bâtiment comprenant des surfaces vitrées devant lesquelles sont intégrés de tels écrans.

Les surfaces vitrées d'un espace de vie sont un élément indispensable permettant d'y faire entrer de la lumière, mais constituent dans le même temps des ponts thermiques qui nuisent au bilan thermique des bâtiments qui les intègrent, Ces surfaces sont également des points faibles en ce qui concerne l'isolation phonique des bâtiments.

Pour réduire les pertes thermiques dues à ces ponts thermiques et diminuer les déperditions calorifiques des surfaces vitrées, on connaît plusieurs techniques.

Ainsi, l'industrie du verre produit des vitrages isolants qui permettent d'augmenter le pouvoir isolant de ces surfaces, mais celles-ci restent des surfaces chaudes en été, ce qui a pour effet d'augmenter de manière intempestive la température de l'espace de vie ainsi exposé. D'autres techniques telles que les films ou vitrages athermiques sont proposées par les industriels, mais elles ne permettent pas d'offrir le confort d'utilisation souhaité.

De même, les fabricants de stores proposent plusieurs solutions d'occultation, qui sont des protections passives très efficaces pour la protection contre les rayons directs du soleil, mais qui ne permettent pas d'obtenir d'isolation efficace contre le froid. En outre, ils ne permettent pas de voir au travers des fenêtres qu'ils équipent.

Par ailleurs, les chauffagistes disposent des radiateurs ou convecteurs au chevet des surfaces vitrées afin de pallier la perte calorifique induite. Si on observe bien une augmentation de température de la pièce concernée, ce réchauffement se fait cependant au prix d'une importante dépense énergétique. En effet, plus l'amplitude thermique entre l'intérieur et l'extérieur est importante plus les pertes le seront aussi.

On constate donc que les différentes solutions techniques existantes ne permettent pas de concilier simultanément une isolation contre le soleil et/ou le froid permettant de garder un visuel sur l'extérieur et de réguler la température du bâtiment en fonction des saisons, tout en étant esthétique et à faible consommation d'énergie.

Le but de la présente invention est donc de remédier à ces inconvénients en apportant une réponse la plus complète possible à ces différents problèmes techniques.

A cet effet, l'invention a pour premier objet un écran thermique translucide comprenant successivement :
- un panneau de captage et d'émission de chaleur, à base de toile métallique dont le taux d'ouverture Aₒ est compris entre 30 et 70%, ledit panneau présentant une conductivité thermique globale à 20°C comprise entre 10 et 60 W/m°C et une capacité thermique massique supérieure ou égal à 400 J/kg.K,
- des moyens de stockage de chaleur, comprenant éventuellement des moyens de chauffage d'appoint et/ou des moyens d'éclairage, lesdits moyens occultant moins de 50% de la surface dudit écran,
- un panneau d'isolation constituée d'une toile présentant un taux d'ouverture Aₒ compris entre 30 et 70%.

L'écran thermique selon l'invention peut en outre incorporer les caractéristiques suivantes, prises isolément ou en combinaison:
- les moyens de stockage de chaleur sont constitués d'un ou plusieurs tubes contenant un matériau caloporteur,
- le ou les tubes sont en acier inoxydable,
- le ou les tubes sont constitués de matière plastique revêtue d'un gainage à base d'acier inoxydable sous forme de fibres ou de fils,
- le ou les tubes contiennent un matériau caloporteur choisi parmi l'eau ou les matériaux à changement de phase,
- les moyens de stockage de la chaleur sont constitués d'une série de tubes parallèles, courants le long de l'écran et répartis sur sa largeur,
- un ou plusieurs des tubes comprennent en outre des moyens d'éclairage, tels que des diodes, intégrés à leur surface extérieure,
- le panneau de captage et d'émission de la chaleur comprend une toile métallique tissée ou tricotée à partir de fibres ou de fils en acier inoxydable dont la conductivité thermique à 20°C est comprise entre 10 et 30 W/m°C,
- le panneau de captage et d'émission de la chaleur comprend en outre des fils ou des câbles de fibres multi-filaments toronnés, dont la conductivité thermique à 20°C est supérieure à 10 W/m°C, de préférence supérieure à 15 W/m°C, voire supérieure à 30 W/m°C,
- la toile métallique tissée ou tricotée à partir de fibres ou de fils en acier inoxydable comprend au moins un fil ou au moins un câble de fibres multi-filaments toronnés dont la résistivité est comprise entre 5 et 30 Ωm,
- le panneau d'isolation est constitué d'une toile tissée en matériau naturel ou en matériau synthétique, la toile étant en outre traitée pour améliorer sa résistance au feu.

Un second objet de l'invention est constitué par un bâtiment comprenant au moins une surface vitrée devant laquelle est positionnée au moins un écran thermique translucide selon l'invention, ledit écran thermique étant solidarisé à un dispositif de suspension fixé sur ledit bâtiment.

Le bâtiment selon l'invention peut en outre incorporer les caractéristiques suivantes, prises isolément ou en combinaison :
- le dispositif de suspension prend la forme d'un rail sur lequel ledit écran thermique translucide peut coulisser,
- le dispositif de suspension prend la forme d'un rail circulaire, sur lequel ledit écran thermique translucide peut coulisser de telle sorte qu'il puisse exposer alternativement sa zone isolante ou sa zone de restitution de la chaleur emmagasinée vers ladite surface vitrée ou vers l'intérieur dudit bâtiment,
- le dispositif de suspension comprend des zones conductrices reliées à une source de courant basse tension, ledit écran thermique translucide étant solidarisé au dispositif de suspension de telle sorte que le courant arrivant par les zones conductrices du dispositif de suspension alimente également l'écran muni de moyens d'éclairage et/ou de moyens de chauffage d'appoint,
- le dispositif de suspension est réalisé en un matériau choisi parmi le bois, le béton, la fibre de verre et le polymère chargé en carbone, les zones conductrices étant réalisées en matériau métallique,
- le bâtiment comprend en outre un système de régulation de température commandant ladite source de courant basse tension, et éventuellement une télécommande permettant d'envoyer des consignes audit système de régulation.

L'invention va maintenant être décrite plus en détail mais de façon non limitative en référence aux figures annexées qui représentent :
- figure 1 : une vue de face d'un écran et d'un dispositif de suspension selon l'invention,
- figure 2 : une vue de côté d'une partie d'un écran selon l'invention,
- figure 3: une vue schématique de dessus d'un dispositif de suspension d'un écran selon l'invention.

L'écran thermique translucide 1 selon l'invention comprend principalement trois éléments, à savoir un panneau de captage et d'émission de chaleur 2, des moyens de stockage de chaleur 3, comprenant éventuellement des moyens de chauffage d'appoint, et un panneau d'isolation 4.

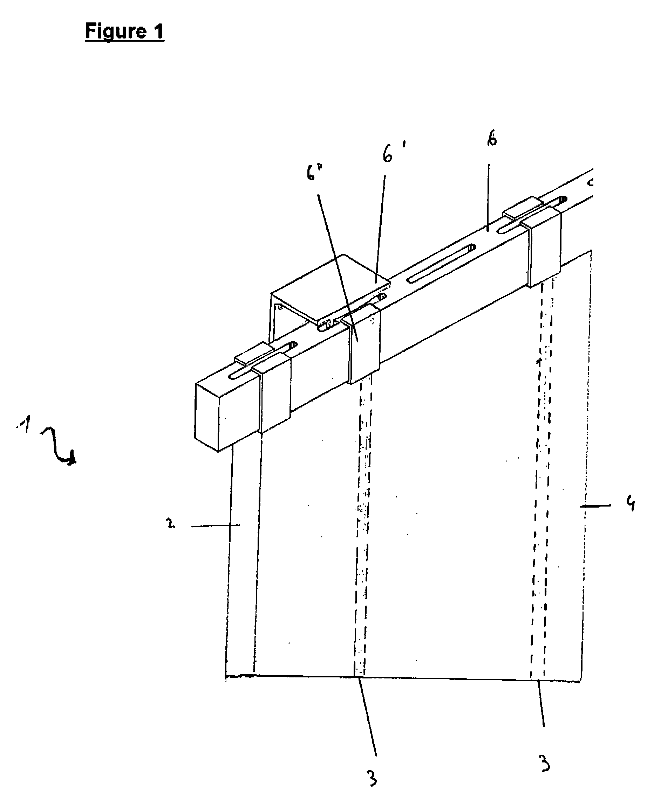

Comme on peut le voir en figure 1 dans un mode de réalisation particulier, le panneau de captage et d'émission de chaleur 2 est, par exemple, constitué d'une toile tissée ou tricotée à partir de fils tréfilés ou de fibres en acier inoxydable. Le choix de l'acier inoxydable, qui pourra être un acier austénitique ou duplex, est ici motivé par sa faible conductivité thermique d'une part, et par sa bonne capacité thermique massique d'autre part.

En effet, la première fonction de ce panneau 2, lorsqu'il est placé face à la surface vitrée, est de transformer l'énergie des rayons solaires en chaleur, ce qui suppose que son matériau présente une bonne capacité thermique massique. Cependant, sa seconde fonction, une fois la nuit arrivée, sera de permettre la restitution de la chaleur emmagasinée par l'écran 1 au cours de la journée. Afin que cette restitution puisse se faire de façon contrôlée dans le temps, il est nécessaire que le matériau présente une faible conductivité thermique.

Cette faible conductivité thermique permet en outre d'éviter que ce panneau 2 ne monte en température lors de l'irradiation solaire, évitant ainsi que l'utilisateur se brûle ou tout risque d'incendie.

Il contribue ainsi au rôle d'écran thermique de l'ensemble qui permet d'isoler la paroi vitrée froide de l'espace de vie dans lequel il est installé.

Pour augmenter son efficacité électrique, un fil tréfilé ou une câble de fibres multi-filaments toronnés en acier inoxydable tel qu'un acier de type 316L ou en un matériau plus conducteur que l'acier inoxydable pourra être ajouté à hauteur de 50%, par exemple.

Par ailleurs, comme l'on souhaite que l'écran 1 reste translucide en cours d'utilisation et permette en particulier de laisser passer le regard au travers de la surface vitrée qu'il isole, le panneau de captage et d'émission de chaleur 2 doit lui-même laisser passer le regard, comme tous les autres éléments de l'écran 1. On impose donc que son taux d'ouverture A₀, tel que défini par la norme ISO 9044, soit compris entre 30 et 70%.

Ce taux d'ouverture Aₒ est en fait le pourcentage de la surface des ouvertures existants dans une toile.

Le second élément de l'écran thermique 1 selon l'invention est constitué de moyens de stockage de la chaleur 3 qui fonctionnent en synergie avec le panneau de captage 2 de la chaleur. Dans ce mode de réalisation particulier, les moyens de stockage 3 sont constitués d'une série de plusieurs tubes 3 en acier inoxydable régulièrement répartis sur la largeur de l'écran 1 et contenant de l'eau en tant que matériau caloporteur. Ces tubes 3 courent le long de l'écran thermique 1 et peuvent s'étendre au-delà afin de faciliter la fixation de l'écran sur le bâtiment.

Ces tubes 3, qui peuvent également être réalisés en plastique fin revêtu d'une tresse fabriquée à partir de fibres ou de fils tréfilés en acier inoxydable, jouent le rôle de capacité thermique. Une fois l'énergie solaire transformée en chaleur par le panneau de captage 2, ils sont à leur chauffés par convection et transmettent cette chaleur au matériau caloporteur. Cette association permet d'augmenter considérablement l'inertie thermique du système et de stoker la chaleur pendant la joumée, puis de la restituer la nuit venue.

Lorsqu'on souhaite obtenir un chauffage complémentaire en hiver, on peut également prévoir de chauffer ces tubes 3 par circulation d'électricité notamment. Dans ce cas, on pourra prévoir d'utiliser en trame de la toile du panneau de captage 2 des fils tréfilés ou de câbles de fibres multi-filaments toronnés présentant une résistivité comprise entre 5 et 30 Ωm. Cet ajout permet en particulier d'éviter les points chauds qui pourraient être dangereux pour l'utilisateur.

Afin de permettre au regard de traverser la surface vitrée protégée, on impose que la surface occultée par ces moyens de stockage 3, et éventuellement par des moyens de chauffage d'appoint et/ou d'éclairage, soit inférieure à 50% de la surface de l'écran, de préférence inférieure à 30% et de façon particulièrement préférée, inférieure à 10% de la surface de l'écran.

Le troisième élément de l'écran selon l'invention est un panneau d'isolation 4, qui pourra être constitué d'une toile tissée en soie, en laine ou avec des fibres en poly-méthacrylate traitée pour résister au feu, ou tout autre matériau capable de satisfaire les exigences techniques requises en fonction du type de bâtiments équipés.

De la même façon que pour le panneau de captage de la chaleur 2, on impose que son taux d'ouverture Aₒ soit compris entre 30 et 70%.

Les différents éléments de l'écran selon l'invention peuvent être solidarisés entre eux par collage ou par tout autre procédé adapté, sachant en particulier que le panneau d'isolation pourra ne pas être solidaire des deux autres éléments, mais être simplement suspendu devant eux, sur le dispositif de suspension.

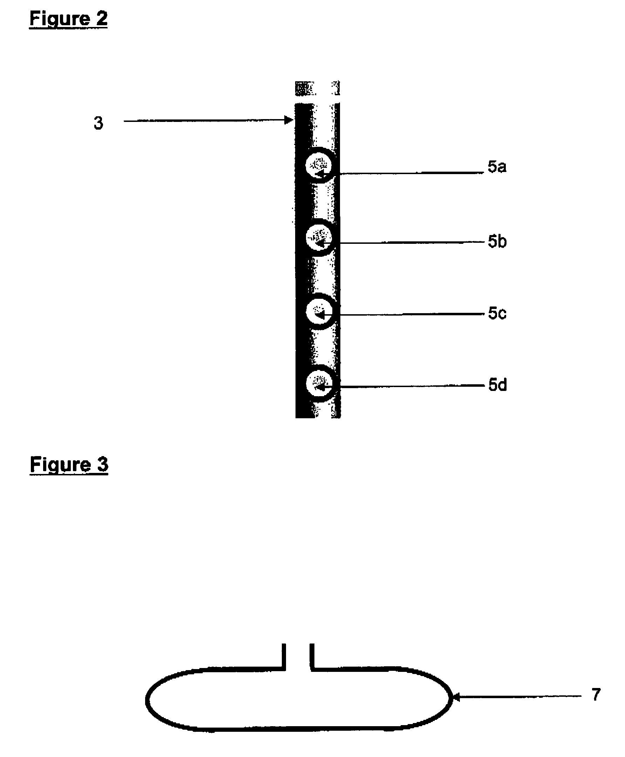

Dans un mode de réalisation particulier, on peut munir certains tubes de stockage de la chaleur 3 de moyens d'éclairage tels que des diodes 5a à 5d, comme on peut le voir en figure 2. Ces diodes 5a à 5d qui sont de préférence orientées vers l'intérieur de l'écran 1, permettent d'obtenir un effet de rideau lumineux qui occulte la vue à travers l'écran 1. En fonction de l'intensité lumineuse émise par la diode, on peut en outre moduler le degré d'occultation jusqu'à rendre l'écran 1 totalement opaque. Ceci permet notamment de préserver l'intimité de l'espace de vie concerné, comme on pourrait le faire pour des stores à lamelles standard, mais avec un effet esthétique d'une qualité toute autre.

L'écran 1 selon l'invention est positionné face à une surface vitrée à l'aide d'un dispositif de suspension 6, 7 qui peut prendre différentes formes et peut être réalisé en différents matériaux tels que le bois, le béton, la fibre de verre ou un polymère chargé en carbone. Il peut prendre la forme d'un rail 6 en trois parties, fixé sur la paroi du bâtiment au moyen de platines, comme cela est représenté en figure 1.

Si l'on souhaite pouvoir munir l'écran 1 de moyens de chauffage d'appoint et/ou de moyens d'éclairage 5, il est alors nécessaire de raccorder ce dispositif de suspension 6, 7 à une source de courant basse tension (12 V) et de prévoir que certaines de ses zones soient conductrices. On pourra en particulier prévoir d'intégrer des bornes métalliques 6' de part et d'autre de l'écran 1, celui-ci étant alors solidarisé au dispositif 6, 7 par l'intermédiaire d'anneaux 6" raccordés aux extrémités libres des tubes de stockage de chaleur 3, lesdits anneaux 6" pouvant coulisser sur le rail 6. Lorsqu'un anneau 6" se trouve positionné face à une des bornes métalliques 6', la connexion électrique peut alors être établie par simple contact. On pourra avantageusement munir ces tubes 3 de diodes intégrées 5a à 5d dans leur surface extérieure, lesdites diodes 5a à 5d étant tournées vers l'intérieur de l'écran 1 afin d'obtenir un effet de rideau lumineux tel qu'il a été précédemment décrit.

Ces bornes métalliques 6' pourront également servir à conduire l'électricité nécessaire au chauffage d'appoint des tubes de stockage de la chaleur 3.

Afin d'optimiser l'utilisation de l'écran selon l'invention, on pourra prévoir d'installer un système de régulation de température commandant la source de courant basse tension, et éventuellement une télécommande permettant d'envoyer des consignes au système de régulation, l'ensemble pouvant bien sur être intégré dans un système de type domotique.

Dans un mode de réalisation particulier, on pourra prévoir un dispositif de suspension permettant d'exposer alternativement la zone isolante ou la zone de restitution de la chaleur emmagasinée par l'écran vers la surface vitrée ou vers l'intérieur du bâtiment. Un exemple de réalisation d'un tel dispositif est présenté en figure 3.

Le fonctionnement de l'écran selon l'invention qui a été décrit jusqu'à présent correspond essentiellement à une utilisation en hiver, devant une surface vitrée fermée.

Il est cependant possible de l'utiliser en été, devant une surface vitrée ouverte afin de bloquer les rayons solaires mais aussi de capter la chaleur de la pièce et de la restituer vers l'extérieur, lorsque la température intérieure est supérieure à la température extérieure.

On voit donc que l'écran thermique translucide selon l'invention permet d'obtenir un écran thermique dynamique réversible, utilisable tant en été qu'en hiver. Il rend en particulier les flux thermiques unidirectionnels, agissant comme un isolant derrières les surfaces vitrées, emmagasinant l'énergie du soleil pour la restituer vers l'intérieur en hiver et vice et versa en été devant une surface vitrée ouverte.

Il permet d'isoler la partie vitrée froide du reste de l'espace de vie tout en réduisant la consommation d'énergie d'un bâtiment ou d'une habitation en utilisant au maximum l'énergie solaire.

Il permet de conserver la possibilité de voir au travers de la surface vitrée, ainsi protégée grâce à l'utilisation de tissus métalliques et plus particulièrement de tissus tissés à base de fibres ou de fils tréfilés en acier inoxydable qui peuvent être associés à d'autres matériaux afin d'augmenter la capacité thermique.

Lorsqu'on souhaite occulter la surface vitrée, l'intégration d'un éclairage dans l'écran permet d'obtenir un effet de rideau lumineux, particulièrement esthétique.

En outre, l'écran selon l'invention garde la souplesse d'un voilage classique grâce à l'utilisation de toiles métalliques, qui sont esthétiques et agréables à la vue, et permet enfin d'assurer une fonction d'écran acoustique.

La conception même de l'écran selon l'invention permet de l'utiliser pour faire écran devant des surfaces vitrées de toute dimensions et, en le multipliant de l'adapter à tout type de surfaces vitrées, telles qu'une fenêtre, une véranda, une façade, une verrière, par exemple. Ces surfaces vitrées pourront se présenter sous forme verticale, mais pourront prendre toutes les inclinaisons souhaitées.

Dans le cadre de la démarche haute qualité environnementale, on voit donc que le système d'écran thermique translucide capteur et émetteur de chaleur selon l'invention est une réponse technique et esthétique aux déperditions calorifiques des surfaces vitrées pour tout type de bâtiments, qu'ils soient à usage professionnel, commercial ou d'habitation individuelle ou collective.

## Revendications

1. Ecran thermique translucide (1) comprenant successivement :
- un panneau de captage et d'émission de chaleur (2), à base de toile métallique dont le taux d'ouverture A₀ est compris entre 30 et 70%, ledit panneau présentant une conductivité thermique globale à 20°C comprise entre 10 et 60 W/m°C et une capacité thermique massique supérieure ou égal à 400 J/kg.K,
- des moyens de stockage de chaleur (3), comprenant éventuellement des moyens de chauffage d'appoint et/ou des moyens d'éclairage (5a, 5b, 5c, 5d), lesdits moyens occultant moins de 50% de la surface dudit écran,
- un panneau d'isolation (4) constitué d'une toile présentant un taux d'ouverture A₀ compris entre 30 et 70%.

2. Ecran thermique (1) selon la revendication 1, dans lequel lesdits moyens de stockage de chaleur (3) sont constitués d'un ou plusieurs tubes (3) contenant un matériau caloporteur.

3. Ecran thermique (1) selon la revendication 2, dans lequel ledit ou lesdits tubes (3) sont en acier inoxydable.

4. Ecran thermique (1) selon l'une ou l'autre des revendications 2 ou 3, dans lequel ledit ou lesdits tubes (3) sont constituées de matière plastique revêtue d'un gainage à base d'acier inoxydable sous forme de fibres ou de fils.

5. Ecran thermique (1) selon l'une quelconque des revendications 2 à 4, dans lequel ledit ou lesdits tubes (3) contiennent un matériau caloporteur choisi parmi l'eau ou les matériaux à changement de phase.

6. Ecran thermique (1) selon l'une quelconque des revendications 2 à 5, dans lequel lesdits moyens de stockage de la chaleur (3) sont constitués d'une série de tubes parallèles (3), courants le long dudit écran et répartis sur sa largeur.

7. Ecran thermique (1) selon l'une quelconque des revendications 2 à 6, dans lequel un ou plusieurs desdits tubes (3) comprennent en outre des moyens d'éclairage, tels que des diodes (5a, 5b, 5c, 5d), intégrés à leur surface extérieure.

8. Ecran thermique (1) selon l'une quelconque des revendications 1 à 7, dans lequel ledit panneau de captage et d'émission de la chaleur (2) comprend une toile métallique tissée ou tricotée à partir de fibres ou de fils en acier inoxydable dont la conductivité thermique à 20°C est comprise entre 10 et 30 W/m°C.

9. Ecran thermique (1) selon la revendication 8, dans lequel ledit panneau de captage et d'émission de la chaleur (2) comprend en outre des fils ou des câbles de fibres multi-filaments toronnés, dont la conductivité thermique à 20°C est supérieure à 10 W/m°C.

10. Ecran thermique (1) selon l'une ou l'autre des revendications 8 ou 9, dans lequel ladite toile métallique tissée ou tricotée à partir de fibres ou de fils en acier inoxydable comprend au moins un fil ou au moins un câble de fibres multi-filaments toronnés dont la résistivité est comprise entre 5 et 30 Ωm.

11. Ecran thermique (1) selon l'une quelconque des revendications 1 à 10, dans lequel ledit panneau d'isolation (4) est constitué d'une toile tissée en matériau naturel ou en matériau synthétique, ladite toile étant en outre traitée pour améliorer sa résistance au feu.

12. Bâtiment comprenant au moins une surface vitrée devant laquelle est positionnée au moins un écran thermique translucide (1) selon l'une quelconque des revendications 1 à 11, ledit écran thermique (1) étant solidarisé à un dispositif de suspension (6,7) fixé sur ledit bâtiment.

13. Bâtiment selon la revendication 12, dans lequel ledit dispositif de suspension prend la forme d'un rail (6, 7) sur lequel ledit écran thermique translucide (1) peut coulisser.

14. Bâtiment selon la revendication 13, dans lequel ledit dispositif de suspension prend la forme d'un rail circulaire (7), sur lequel ledit écran thermique translucide (1) peut coulisser de telle sorte qu'il puisse exposer alternativement sa zone isolante ou sa zone de restitution de la chaleur emmagasinée vers ladite surface vitrée ou vers l'intérieur dudit bâtiment.

15. Bâtiment selon l'une quelconque des revendications 12 à 14, dans lequel ledit dispositif de suspension (6, 7) comprend des zones conductrices (6') reliées à une source de courant basse tension, ledit écran thermique translucide (1) étant solidarisé au dispositif de suspension (6, 7) de telle sorte que le courant arrivant par lesdites zones conductrices (6') du dispositif de suspension (6, 7) alimente également l'écran (1) muni de moyens d'éclairage (5a, 5b, 5c, 5d) et/ou de moyens de chauffage d'appoint.

16. Bâtiment selon la revendication 15, dans lequel ledit dispositif de suspension (6, 7) est réalisé en un matériau choisi parmi le bois, le béton, la fibre de verre et le polymère chargé en carbone, les zones conductrices (6') étant réalisées en matériau métallique.

17. Bâtiment selon l'une ou l'autre des revendications 15 ou 16, comprenant en outre un système de régulation de température commandant ladite source de courant basse tension, et éventuellement une télécommande permettant d'envoyer des consignes audit système de régulation.
